(19) Europäisches Patentamt
European Patent Office
Office européen des brevets

(11) **EP 4 397 434 A1**

(12) **EUROPEAN PATENT APPLICATION**
published in accordance with Art. 153(4) EPC

(43) Date of publication:
**10.07.2024   Bulletin 2024/28**

(21) Application number: **23790533.6**

(22) Date of filing: **15.08.2023**

(51) International Patent Classification (IPC):
**B23P 15/00** (2006.01)

(86) International application number:
**PCT/CN2023/113075**

(87) International publication number:
**WO 2024/109184 (30.05.2024 Gazette 2024/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:  **25.11.2022   CN 202211494301**

(71) Applicant: **Xi'an Space Engine Company Limited**
**Xi'an, Shaanxi 710100 (CN)**

(72) Inventors:
• **WU, Xiaoming**
  **Xi'an, Shaanxi 710100 (CN)**
• **LU, Bo**
  **Xi'an, Shaanxi 710100 (CN)**

• **HE, Xiaohu**
  **Xi'an, Shaanxi 710100 (CN)**
• **ZHANG, Wenbo**
  **Xi'an, Shaanxi 710100 (CN)**
• **QIU, Weizhen**
  **Xi'an, Shaanxi 710100 (CN)**
• **ZHANG, Qinlian**
  **Xi'an, Shaanxi 710100 (CN)**
• **AI, Changhui**
  **Xi'an, Shaanxi 710100 (CN)**
• **LIU, Guozeng**
  **Xi'an, Shaanxi 710100 (CN)**

(74) Representative: **Vitina, Maruta et al**
**Agency TRIA ROBIT**
**P.O. Box 22**
**1010 Riga (LV)**

(54) **MACHINING METHOD FOR PRESSURE MEASUREMENT HOLE OF UNVIEWABLE INTERLAYER COOLING STRUCTURE BRAZED MEMBER**

(57)    A method of machining a pressure hole of a brazed part with a non-visible sandwich cooling structure includes the following steps. A cooling groove and a pressure-measuring boss are machined on the inner wall. The center of the boss is determined to scribe a line. The scribed line is led to an inner surface of the inner wall. The inner wall and the outer wall are electroplated and assembled through brazing. The scribed line on the inner surface of the brazed assembly is led to the outer wall. A hole is drilled, and then expanded after X-ray inspection. The expanded hole is subjected to X-ray inspection. After the expanded hole satisfies the machining requirements, the measuring nozzle hole is machined. The method realizes the precise machining of a measuring nozzle hole with an offset not greater than 0.5 mm.

Fig. 1

**Description**

**TECHNICAL FIELD**

This application relates to machining, and more particularly to a method of machining a pressure hole of a brazed part with a non-visible sandwich cooling structure.

**BACKGROUND**

For a liquid rocket engine, the temperature of the high-temperature gas may reach 3000-4000K, and the heat flow density is up to 160 W/m$^2$, far more than the temperature limit of the current material. To adapt to high-speed scrubbing conditions of the high-temperature oxygen-rich gas, the combustion assembly of the liquid oxygen kerosene high-pressure staged combustion engine is designed as a groove-milling sandwich cooling structure, with an inner wall made of a copper alloy with excellent heat dissipation properties and an outer wall made of high-strength stainless steel. The inner wall and the outer wall are connected through vacuum diffusion brazing. During the operation of the rocket engine, one side of the inner wall is the high-temperature gas, and the other side of the inner wall is loaded with a low-temperature liquid oxygen propellant. The inner wall of the rocket engine is cooled through the liquid oxygen so that its temperature is kept below the melting point, ensuring the service performance.

With the enhancement of engine thrust, higher requirements are put forward for the effective volume of the gas generator and the reliability of the inner wall of the gas generator body. In the prior art, the gas generator body of a high-thrust engine adopts a sandwich cooling structure. For the first time, a pressure and temperature fluctuation detecting nozzle is added to the body to measure the pressure and temperature fluctuation of the oxygen-rich gas in the gas generator, so as to assess the reliability of the gas generator and provide data support for the autonomous shutdown of the engine during the starting phase. However, the installation of the pressure and temperature fluctuation detecting nozzle on the body still has the following difficulties.

(1) In order to avoid weakening the cooling effect of the cooling loop, the size of the nozzle platform for the brazed part having the sandwich cooling structure is only 1mm larger than that of the nozzle.
(2) After brazing the inner wall and the outer wall of the brazed part having the sandwich cooling structure, the boss of the inner wall is invisible, such that the machining position of the nozzle cannot be determined.
(3) If the measuring nozzle is improperly machined, it will directly lead to the exposure of the sandwich cooling brazed structure, resulting in product scrap. Therefore, how to accurately machine the measuring nozzle is very critical.

**SUMMARY**

An object of the present disclosure is to provide a method of machining a pressure hole of a brazed part with a non-visible sandwich cooling structure and a positioning and scribing tooling to overcome the deficiencies in the prior art. The method provided herein achieves accurate machining of the pressure hole with an offset of no more than 0.5mm, and solves the problem of positioning and machining the pressure hole of the brazed part with a sandwich cooling structure in the invisible state.

The technical solutions of the present disclosure are described as follows.

This application provides a method of machining a pressure hole of a brazed part with a non-visible sandwich cooling structure, comprising:

(S 1) machining a cooling groove and a pressure-measuring boss on an outer surface of an inner wall; and aligning a center of the pressure-measuring boss followed by scribing;
(S2) leading, by a first scribing and positioning tool, a scribed line at the center of the pressure-measuring boss to an inner surface of the inner wall;
(S3) electroplating the outer surface of the inner wall and an inner surface of an outer wall; and assembling the inner wall with the outer wall followed by diffusion brazing connection to form a brazed assembly;
(S4) leading, by a second scribing and positioning tool, a scribed line on the inner surface of the inner wall determined in step (S2) to an outer surface of the outer wall of the brazed assembly;
(S5) machining an initial hole centered on a measuring position on the outer surface of the outer wall of the brazed assembly, wherein the initial hole has a radius of $R_1$;
(S6) performing X-ray inspection with the initial hole obtained in step (S5) as center; on an X-ray negative, determining coordinates (0, 0) of the center of the pressure-measuring boss and coordinates $(X_1, Y_1)$ of a center of the initial hole by scribing; and measuring a radius $R_2$ of the pressure-measuring boss;

(S7) expanding the initial hole obtained in step (S5) to obtain a $1^{st}$-expanded hole with a radius $R_3$ using the coordinates of the center of the pressure-measuring boss determined in step (S6) as reference;

(S8) performing X-ray inspection centered on the $1^{st}$-expanded hole; determining coordinates $(X_2, Y_2)$ of a center of the $1^{st}$-expanded hole; and measuring a radius $R_4$ of the pressure-measuring boss;

(S9) determining a change value $(\Delta X, \Delta Y)$ according to the center of the $1^{st}$-expanded hole in step (S8) and the center of the initial hole in step (S6); and if the change value $(\Delta X, \Delta Y)$ is less than an allowed value $(\Delta X_{allowed}, \Delta Y_{allowed})$, machining a measuring nozzle hole according to the center of the $1^{st}$-expanded hole determined in step (S8) and a radius $R_{nozzle}$; and

(S10) if the change value $(\Delta X, \Delta Y)$ is greater than the allowed value $(\Delta X_{allowed}, \Delta Y_{allowed})$, repeating steps (S7)-(S9) until a change value $(\Delta X_i, \Delta Y_i)$ is less than the allowed value $(\Delta X_{allowed}, \Delta Y_{allowed})$ after i expansions; performing X-ray inspection centered on an $i^{th}$-expanded hole using an X-ray probe to determine coordinates $(X_i, Y_i)$ of a center of the $i^{th}$-expanded hole; and machining the measuring nozzle hole according to the center of the $i^{th}$-expanded hole and the radius $R_{nozzle}$.

In some embodiments, the first scribing and positioning tool comprises a first positioning block, a first scribing plate, a first fastening screw and a second fastening screw; the first positioning block comprises an outer positioning ring and a first block fixedly connected with the outer positioning ring; the outer positioning ring comprises a first ring body and a second ring body integrally connected with the first ring body; the second ring body is configured to be inserted in an inner side of the inner wall, and the first ring body is connected to an end of the second ring body, and abuts against a top of the inner wall; the first block is located on a side of the first ring body away from the second ring body; the first fastening screw is threadedly connected to the second ring body, and an end of the first fastening screw abuts against the inner surface of the inner wall; the first block is provided with a recess; the first scribe plate is arranged in the recess; the second fastening screw is threadedly connected to the first block with an end extending into the recess; and a first end of the first scribing plate is located at the inner side of the inner wall, and a second end of the first scribing plate is located at an outer side of the inner wall.

In some embodiments, step (S2) is performed through steps of:

inserting the first positioning block in the inner side of the inner wall; turning the first positioning block to allow the second end of the first scribing plate to be in tight contact with a boss on the outer surface of the inner wall; turning the first fastening screw to fasten the outer positioning ring of the first positioning block with the inner wall; moving the first scribing plate to allow the first end of the first scribing plate to be in close contact with the inner surface of the inner wall; turning the second fastening screw to fasten the first scribing plate with the first positioning block; and depicting an outer contour of a contact region to determine a center of the outer contour, wherein the center of the outer contour is configured as the center of the pressure-measuring boss on the inner surface of the inner wall for scribing.

In some embodiments, the second scribing and positioning tool comprises a second positioning block, a second scribing plate, a third fastening screw, and a fourth fastening screw; the second positioning block comprises an inner positioning ring and a second block; the inner positioning ring comprises a third ring body and a fourth ring body integrally connected with the third ring body; the fourth ring body is located on an outer side of the outer surface of the outer wall; the third ring body is connected to an end of the fourth ring body, and abuts against an end of the outer wall; the second block is located on a side of the third ring body away from the fourth ring; the third fastening screw is threadedly connected to the fourth ring body, and an end of the third fastening screw abuts against the outer surface of the outer wall; the second block is provided with a recess, and the second scribing plate is arranged in the recess; the fourth fastening screw is threadedly connected to the second block with an end extending into the recess; and a first end of the second scribing plate is located at an inner side of the inner wall, and a second end of the second scribing plate is located at the outer side of the outer wall.

In some embodiments, step (S4) is performed through steps of:

installing the second positioning block into the outer wall of the brazed assembly with an end surface of the outer wall as a positioning reference; adjusting a circumferential position of the second positioning block to allow the first end of the second scribing plate to be in close contact with the scribed line on the inner surface of the inner wall of the brazed assembly; fastening the second positioning block with the brazed assembly through the third fastening screw; moving the second scribing plate to allow the second end of the second scribing plate to be in close contact with the outer surface of the outer wall of the brazed assembly; fastening the second scribing plate with the second positioning block through the fourth fastening screw; and depicting an outer contour of a contact region to determine a center of the outer contour, wherein the center of the outer contour is configured as the center of the pressure-measuring boss (21) on the outer surface of the outer wall (1) of the brazed assembly for scribing.

In some embodiments, $R_1 \leq 1/5 R_{boss}$, wherein $R_{boss}$ refers to a theoretical radius of the pressure-measuring boss (21).

$$R_3 = \frac{R_1 \times R_2}{R_{boss}} + \sqrt{X_1^2 + Y_1^2} \leq 1/2 R_{nozzle}$$

In some embodiments, in step S7, the radius $R_3$ is calculated by , wherein $R_{nozzle}$ is the radius of the measuring nozzle *Rboss* hole.

In some embodiments, in step (S9),

$$\Delta X = X_2 - X_1, \Delta Y = Y_2 - Y_1;$$

and

$$\Delta X_{allowed} = (R_{boss} - R_{nozzle}) \times R$$

$$\Delta Y_{allowed} = (R_{boss} - R_{nozzle}) \times R,$$

$$R = \sqrt{(X_2 - X_1)^2 + (Y_2 - Y_1)^2} \times \frac{R_4}{R_2}$$

wherein R is an X-ray detection systematic error, and ; and

$$R_{nozzle} = \frac{R_4 \times R_2}{R_{boss}} + \sqrt{X_2^2 + Y_2^2} \leq 2/3 R_{boss}.$$

In some embodiments, in step (S10),

$$\Delta X_i = X_i - X_{i-1}, \Delta Y = Y_i - Y_{i-1};$$

and

$$R_i = \frac{R_{i-1} \times R_2}{R_{boss}} + \sqrt{(X_i - X_{i-1})^2 + (Y_i - Y_{i-1})^2} \leq R_{nozzle};$$

wherein $(X_i, Y_i)$ are coordinates of the center of the $i^{th}$-expanded hole; and $(X_{i-1}, Y_{i-1})$ are coordinates of a center of an $(i-1)^{th}$-expanded hole.

Compared to the prior art, the present disclosure has the following beneficial effects.

(1) The present disclosure provides a precision processing method based on X-ray inspection for non-visible holes. On account of the advantages of non-destructive inspection of X-ray inspection, the problem of positioning of non-visible measuring nozzles is solved. This application provides an empirical formula for iteratively adjusting the hole position offset and machining dimensions considering the influence of X-ray inspection errors, positioning tool errors and thermal deformation of the brazed assembly, and gives a machining determination method. By using the method provided herein, the precision processing of a measuring nozzle hole with an offset not greater than 0.5 mm is realized, solving the problem of processing of non-visible measuring nozzle hole of a brazed assembly with a sandwich cooling structure.

(2) To satisfy the positioning needs of parts and brazed assemblies, the present disclosure provides two sets of positioning scribing tools, which realize the transformation of the scribing position between the inner surface and the outer surface of the cylindrical structural part through a U-shaped scribing plate. At the same time, combined with the characteristics of the cylindrical thin-walled part and the brazed assembly, the reasonable selection of the reference positioning position, positioning forms and fastening methods, the reliability of the positioning and scribing function is ensured. Compared with the traditional end-face positioning and scribing method, the method provided herein avoids the influence of brazing thermal deformation on the scribing method. Secondly, compared with the X-ray inspection and positioning, the method provided herein can quickly determine an initial position through a positioning and scribing tool, which improves the inspection efficiency.

This method is not limited by the product structure, and is applicable to the stringent requirements for the processing of measuring nozzle holes of a brazed part with a sandwich cooling structure in the liquid oxygen paraffin rocket engine. In addition, this method is also adapted to the machining of parts with non-visible positioning basis in the aerospace, nuclear power, weapons and civil fields.

**BRIEF DESCRIPTION OF THE DRAWINGS**

Fig. 1 schematically shows a tapered section of a gas generator of a high-thrust liquid rocket motor according to an embodiment of the present disclosure;
Fig. 2schematically shows a first scribing and positioning tool according to an embodiment of the present disclosure; and
Fig. 3 schematically shows a second scribing and positioning tool according to an embodiment of the present disclosure.

In the drawings: 1, outer wall; 2, inner wall;

21, pressure-measuring boss; and 22, measuring nozzle hole;
11, first positioning block; 12, first scribing plate; 121, outer side end; 122, inner side end; 13, first fastening screw; 14, second fastening screw; 111, first handle; 112, outer positioning ring; and 113, first block; and
21, second positioning block; 22, second scribing plate; 221, inner end; 222, outer end; 23, third fastening screw; 24, fourth fastening screw; 211, second handle; 212, inner positioning ring; and 213, second block.

**DETAILED DESCRIPTION OF EMBODIMENTS**

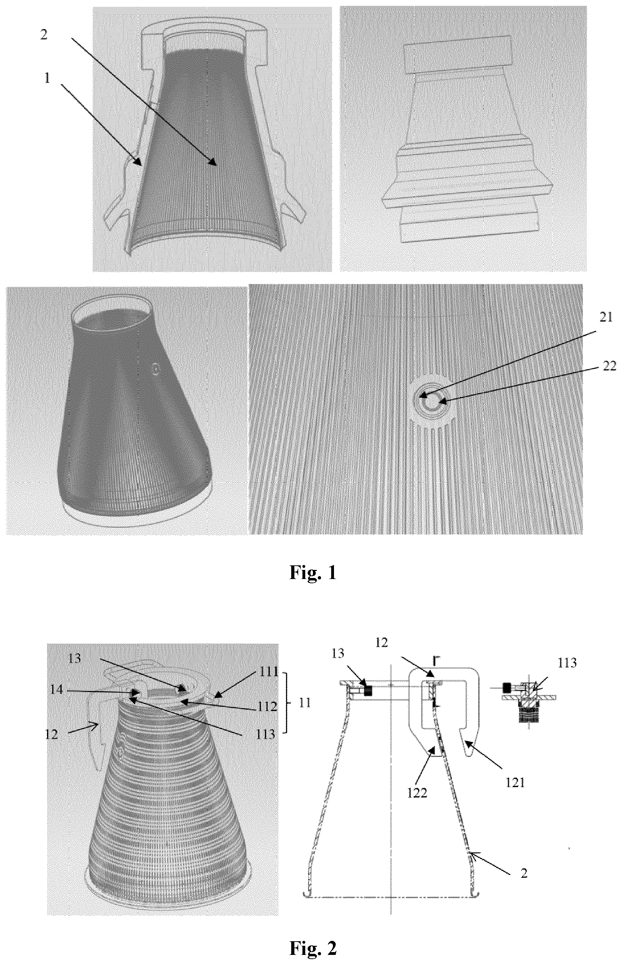

The technical solutions of the present disclosure will be further described below with reference to the accompanying drawings and embodiments.
The implementations of the present disclosure will be described in detail below with reference to embodiments, so that the solutions and advantages of the present disclosure can be better understood. However, the described embodiments are only for illustrative purposes and should not be considered as limitations to the present disclosure.
As shown in Fig. 1, a tapered section of a gas generator of a high-thrust liquid rocket motor is illustrated, which is formed by an outer wall 1 and an inner wall 2 through diffusion brazing. The inner wall is made of QCr0.8 copper alloy, and the outer wall is made of S-03 high strength stainless steel. The diameter of a pressure-measuring boss 21 on the surface of the inner wall is 20 mm, and the diameter of the measuring nozzle hole 22 is 18 mm.
A method of machining a pressure hole on the tapered section is provided, including the following steps.

(S1) A cooling groove is machined on an outer surface of the inner wall 2 through milling. A pressure-measuring boss is machined on an outer surface of an inner wall 2, and a center of the pressure-measuring boss 21 is aligned during machining followed by scribing.
(S2) A scribed lint at the center of the pressure-measuring boss 21 is led to an inner surface of the inner wall 2 using a first scribing and positioning tool.
(S3)The outer surface of the inner wall 2 and an inner surface of an outer wall 1 are electroplated. The inner wall 2 is assembled with the outer wall 1 followed by diffusion brazing connection to form a brazed assembly. Specifically, the outer surface of the inner wall is silver-plated, and the inner surface of the outer wall is copper-plated. The assembly gap is required to be no greater than 50 $\mu$m. The brazing method is gas-shielded diffusion brazing.
(S4) The scribed line on the inner surface of the inner wall 2 of the brazed assembly determined in step (S2) is led to an outer surface of the outer wall of the brazed assembly using a second scribing and positioning tool.
(S5) An initial hole is machined centered on a measuring position determined in step (S4), where the initial hole has a radius of $R_1$; $R_1$ 1/5$R_{boss}$; and $R_{boss}$ refers to a theoretical radius of the pressure-measuring boss.
(S6) X-ray inspection is performed with the initial hole obtained in step (S5) as center, on an X-ray negative to determine coordinates (0, 0) of the center of the pressure-measuring boss 21 and coordinates $(X_1, Y_1)$ of a center of the initial hole by scribing. A radius $R_2$ of the pressure-measuring boss 21 is measured.

(S7) The initial hole obtained in step (S5) is expanded to obtain a 1$^{st}$-expanded hole with a radius $R_3$ using the

coordinates of the center of the pressure-measuring boss 21 determined in step (S6) as reference, where

$$R_3 = \frac{R_1 \times R_2}{R_{boss}} + \sqrt{X_1^2 + Y_1^2} \leq 1/2 R_{nozzle}$$

. Rboss

(S8) X-ray inspection is performed centered on the 1st-expanded hole to determine coordinates $(X_2, Y_2)$ of a center of the 1st-expanded hole, and a radius $R_4$ of the pressure-measuring boss 21 is measured.

(S9) A change value $(\Delta X, \Delta Y)$ is determined according to the center of the 1st-expanded hole in step (S8) and the center of the initial hole in step (S6). If the change value $(\Delta X, \Delta Y)$ is less than an allowed value $(\Delta X_{allowed}, \Delta Y_{allowed})$, then a measuring nozzle hole is machined according to the center of the 1st-expanded hole determined in step (S8) and a radius $R_{nozzle}$ of the measuring nozzle hole, where $\Delta X = X_2 - X_1$, $\Delta Y = Y_2 - Y_1$;

$$\Delta X_{allowed} = ( R_{boss} - R_{nozzle} ) \times R$$

$$\Delta Y_{allowed} = ( R_{boss} - R_{nozzle} ) \times R_,$$

where R is an X-ray detection systematic error, and

$$R = \sqrt{(X_2 - X_1)^2 + (Y_2 - Y_1)^2} \times \frac{R_4}{R_2}$$

; and

$$R_{nozzle} = \frac{R_4 \times R_2}{R_{boss}} + \sqrt{X_2^2 + Y_2^2} \leq 2/3 R_{boss}$$

.

(S10) If the change value $(\Delta X, \Delta Y)$ is greater than the allowed value $(\Delta X_{allowed}, \Delta Y_{allowed})$, steps (S7)-(S9) are repeated until a change value $(\Delta X_i, \Delta Y_i)$ is less than the permissible value $(\Delta X_{allowed}, \Delta Y_{allowed})$ after i expansions. X-ray inspection is performed centered on an $i^{th}$-expanded hole using an X-ray probe to determine coordinates $(X_i, Y_i)$ of a center of the $i^{th}$-expanded hole, and the measuring nozzle hole is machined according to the center of the $i^{th}$-expanded hole and the radius $R_{nozzle}$ of the measuring nozzle hole, where

$$\Delta X_i = X_i - X_{i-1}, \Delta Y = Y_i - Y_{i-1};$$

and

$$R_i = \frac{R_{i-1} \times R_2}{Rboss} + \sqrt{(X_i - X_{i-1})^2 + (Y_i - Y_{i-1})^2} \leq R_{nozzle}.$$

As shown in Fig. 2, the first scribing and positioning tool includes a first positioning block 11, a first scribing plate 12, a first fastening screw 13 and a second fastening screw 14. The first positioning block 11 consists of a first handle 111, an outer positioning ring 112 and a first block 113 through welding. The outer positioning ring 112 includes a first ring body and a second ring body integrally connected with the first ring body. The second ring body is configured to be inserted in an inner side of the inner wall 2, and the first ring body is connected to an end of the second ring and abuts against a top of the inner wall 2. The first block 113 is located on a side of the first ring body away from the second ring body. The first fastening screw 13 is threadedly connected to the second ring body, and an end of the first fastening screw 13 abuts against the inner surface of the inner wall 2. The first block 113 is provided with a recess. The first scribe plate 12 is arranged in the recess. The second fastening screw 14 is threadedly connected to the first block 113 with an end extending into the recess. A first end of the first scribing plate 12 is located at the inner side of the inner wall 2, and a second end of the first scribing plate 12 is located at an outer side of the inner wall 2. The outer positioning ring 112 is machined with a threaded hole for mating with the first fastening screw 13, and the first block 113 is machined with a threaded hole for mating with the second fastening screw 14.

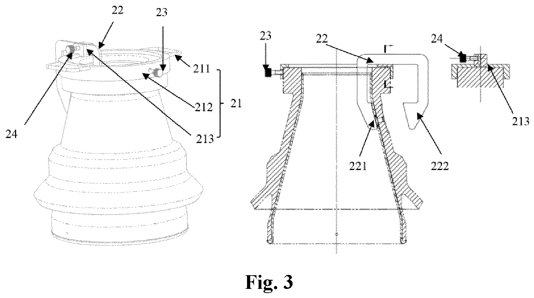

As shown in Fig. 3, the first positioning block 11 is inserted in the inner side of the inner wall 2 with an end surface of the inner wall as a positioning reference. The distance between the end face of the inner wall and the first positioning block 11 should be no more than 3 μm when measured by a plug gauge. The first scribing plate 12 is placed in the recess of the first positioning block 11. The circumferential position of the first positioning block 11 is adjusted.

One end of the first scribing plate 12 located outside the inner wall is configured as an outer side end 121, and the other end of the first scribing plate 12 located inside the inner wall is configured as an inner side end 122. The outer side end 121 is aligned with the pressure-measuring boss on the outer surface of the inner wall. The outer positioning ring 112 of the first positioning block 11 is tightened with the inner wall 2 through the first fastening screw 13. The first scribing plate 12 is moved to allow the inner side end 122 of the first scribing plate to closely contact with the inner surface of the inner wall 2. The first scribing plate 12 is tightened with the first locating block 11 through the second fastening screw 14. An outer contour of a contact region is depicted to determine a center of the outer contour, where the center of the outer contour is configured as the scribed line of the pressure-measuring boss 21 on the inner surface of the inner wall 2.

The second scribing and positioning tool includes a second positioning block 21, a second scribing plate 22, a third fastening screw 23, and a fourth fastening screw 24. The second positioning block 21 includes a second handle 211, an inner positioning ring 212 and a second block 213, and the second handle 211, the inner positioning ring 212 and the second block 213 are integrally connected. The inner positioning ring 212 includes a third ring body and a fourth ring body, and the third ring body and the fourth ring body are integrally connected. The fourth ring body is located on an outer side of the outer surface of the outer wall 1. The third ring body is connected to an end of the fourth ring body and abuts against an end of the outer wall 1. The second block 213 is located on a side of the third ring body away from the fourth ring body. The third fastening screw 23 is threadedly connected to the fourth ring body, and an end of the third fastening screw 23 abuts against the outer surface of the outer wall 1. The second block 213 is provided with a recess, and the second scribing plate 22 is arranged in the recess. The fourth fastening screw 24 is threadedly connected to the second block 213 with an end extending into the recess. A first end of the second scribing plate 22 is located at an inner side of the inner wall 2, and a second end of the second scribing plate 22 is located at the outer side of the outer wall 1.

The second positioning block 21 is inserted into the outer wall 1 of the brazed assembly with an end surface of the outer wall1 as a positioning reference. A circumferential position of the second positioning block 21 is adjusted. One end of the second scribing plate 22 located inside the brazed assembly is configured as an inner end 221, and the other end of the second scribing plate 22 located outside the brazed assembly is configured as an outer end 222. The inner end 221 is aligned with the scribed line on the inner surface of the inner wall 2 of the brazed assembly. The second positioning block 21 is fastened with the brazed assembly through the third fastening screw 23. The second scribing plate 22 is moved to a position where the outer end 222 of the second scribing plate 22 closely contacts with the outer surface of the outer wall 1 of the brazed assembly. The second scribing plate 22 is fastened with the second positioning block 21 through the fourth fastening screw 24. An outer contour of a contact region is depicted to determine a center of the outer contour, where the center of the outer contour is configured as the scribed line of the pressure-measuring boss 21 on the outer surface of the outer wall 1 of the brazed assembly.

The principles of the method provided herein are described below.

Firstly, the scribed line of the pressure-measuring boss on the outer surface of the inner wall is roughly led to the inner surface of the inner wall through the first scribing and positioning tool 1. After the inner wall is fixedly connected to the outer wall to obtain the brazed assembly, the scribed line of the pressure-measuring boss on the inner surface of the inner wall is roughly led to the outer surface of the outer wall of the brazed assembly through the second scribing and positioning tool 2. In this step, during the fix connection of the inner wall and the outer wall, the inner wall and the outer wall may suffer deformation. By using the first scribing and positioning tool 1 and the second scribing and positioning tool 2, the scribed line of the pressure-measuring boss will be led to the outer surface of the outer wall to obtain the approximate scribed line of the pressure-measuring boss.

Afterwards, the hole with a smaller diameter is initially processed centered with the scribed line of the pressure-measuring boss, and then the center of the pressure-measuring boss is determined by perspective. Subsequently, the hole is expanded with the center of the pressure-measuring boss as the basis until the difference on the center of the hole is less than the set allowed value after expanding. Afterwards, the measuring nozzle hole is machined according to the center of the hole determined at this time and the radius $R_{nozzle}$ of the measuring nozzle hole. The method provided herein achieves an accurate processing of the measuring nozzle hole with an offset of no more than 0.5mm, and solves the problem of invisible processing of the measuring nozzle hole of the brazed part with the sandwich cooling structure.

Disclosed above are merely preferred embodiments of the present application, which are not intended to limit the present disclosure. Through the disclosure has been described in detail above, one of ordinary skill in the art may still make various changes and modifications. It should be understood that those changes and modifications made without departing from the scope of the present disclosure shall fall within the scope of the present disclosure defined by the appended claims.

## Claims

1. A method of machining a pressure hole of a brazed part with a non-visible sandwich cooling structure, comprising:

(S1) machining a cooling groove and a pressure-measuring boss on an outer surface of an inner wall (2); and aligning a center of the pressure-measuring boss (21) followed by scribing;

(S2) leading, by a first scribing and positioning tool, a scribed line at the center of the pressure-measuring boss (21) to an inner surface of the inner wall (2);

(S3) electroplating the outer surface of the inner wall (2) and an inner surface of an outer wall (1); and assembling the inner wall (2) with the outer wall (1) followed by diffusion brazing connection to form a brazed assembly;

(S4) leading, by a second scribing and positioning tool, a scribed line on the inner surface of the inner wall (2) determined in step (S2) to an outer surface of the outer wall of the brazed assembly;

(S5) machining an initial hole centering on a measuring position on the outer surface of the outer wall (1) of the brazed assembly determined in step (S4), wherein the initial hole has a radius of $R_1$;

(S6) performing X-ray inspection with the initial hole obtained in step (S5)ascenter; on an X-ray negative, determining coordinates $(0, 0)$ of the center of the pressure-measuring boss (21) and coordinates $(X_1, Y_1)$ of a center of the initial hole by scribing; and measuring a radius $R_2$ of the pressure-measuring boss (21);

(S7) expanding the initial hole obtained in step (S5) to obtain a 1st-expanded hole with a radius $R_3$ using the coordinates of the center of the pressure-measuring boss (21) determined in step (S6) as reference;

(S8) performing X-ray inspection centered on the 1st-expanded hole; determining coordinates $(X_2, Y_2)$ of a center of the 1st-expanded hole; and measuring a radius $R_4$ of the pressure-measuring boss (21);

(S9) determining a change value $(\Delta X, \Delta Y)$ according to the center of the 1st-expanded hole in step (S8) and the center of the initial hole in step (S6); and if the change value $(\Delta X, \Delta Y)$ is less than an allowed value $(\Delta X_{allowed}, \Delta Y_{allowed})$, machining a measuring nozzle hole according to the center of the 1st-expanded hole determined in step (S8) and a radius $R_{nozzle}$; and

(S10) if the change value $(\Delta X, \Delta Y)$ is greater than the allowed value $(\Delta X_{allowed}, \Delta Y_{allowed})$, repeating steps (S7)-(S9) until a change value $(\Delta X_i, \Delta Y_i)$ is less than the allowed value $(\Delta X_{allowed}, \Delta Y_{allowed})$ after i expansions; performing X-ray inspection centered on an $i^{th}$-expanded hole using an X-ray probe to determine coordinates $(X_i, Y_i)$ of a center of the $i^{th}$-expanded hole; and machining the measuring nozzle hole according to the center of the $i^{th}$-expanded hole and the radius $R_{nozzle}$.

2. The method according to claim 1, **characterized in that** the first scribing and positioning tool comprises a first positioning block (11), a first scribing plate (12), a first fastening screw (13) and a second fastening screw (14); the first positioning block (11) comprises an outer positioning ring (112) and a first block (113) fixedly connected with the outer positioning ring (112); the outer positioning ring (112) comprises a first ring body and a second ring body integrally connected with the first ring body; the second ring body is configured to be inserted in an inner side of the inner wall (2), and the first ring body is connected to an end of the second ring body, and abuts against a top of the inner wall (2); the first block (113) is located on a side of the first ring body away from the second ring body; the first fastening screw (13) is threadedly connected to the second ring body, and an end of the first fastening screw (13) abuts against the inner surface of the inner wall (2); the first block (113) is provided with a recess; the first scribe plate (12) is arranged in the recess; the second fastening screw (14) is threadedly connected to the first block (113) with an end extending into the recess; and a first end of the first scribing plate (12) is located at the inner side of the inner wall (2), and a second end of the first scribing plate (12) is located at an outer side of the inner wall (2).

3. The method according to claim 2, **characterized in that** step (S2) is performed through steps of:
inserting the first positioning block (11) in the inner side of the inner wall (2); turning the first positioning block (11) to allow the second end of the first scribing plate (12) to be in tight contact with a boss on the outer surface of the inner wall (2); turning the first fastening screw (13) to fasten the outer positioning ring (112) of the first positioning block (11) with the inner wall (2); moving the first scribing plate (12) to allow the first end of the first scribing plate to be in close contact with the inner surface of the inner wall (2); turning the second fastening screw (14) to fasten the first scribing plate (12) with the first positioning block (11); and depicting an outer contour of a contact region to determine a center of the outer contour, wherein the center of the outer contour is configured as the center of the pressure-measuring boss (21) on the inner surface of the inner wall (2) for scribing.

4. The method according to claim 1, **characterized in that** the second scribing and positioning tool comprises a second positioning block (21), a second scribing plate (22), a third fastening screw (23), and a fourth fastening screw (24); the second positioning block (21) comprises an inner positioning ring (212) and a second block (213); the inner positioning ring (212) comprises a third ring body and a fourth ring body integrally connected with the third ring body; the fourth ring body is located on an outer side of the outer surface of the outer wall (1); the third ring body is connected to an end of the fourth ring body, and abuts against an end of the outer wall (1); the second block (213) is located on a side of the third ring body away from the fourth ring; the third fastening screw (23) is threadedly connected to the fourth ring body, and an end of the third fastening screw (23) abuts against the outer surface of the outer wall (1); the second block (213) is provided with a recess, and the second scribing plate (22) is arranged in the recess; the fourth fastening screw (24) is threadedly connected to the second block (213) with an end extending into the recess; and a first end of the second scribing plate (22) is located at an inner side of the inner wall (2), and a second end of the second scribing plate (22) is located at the outer side of the outer wall (1).

5. The method according to claim 4, **characterized in that** step (S4) is performed through steps of: installing the second positioning block (21) into the outer wall (1) of the brazed assembly with an end surface of the outer wall (1) as a positioning reference; adjusting a circumferential position of the second positioning block (21) to allow the first end of the second scribing plate (22) to be in close contact with the scribed line on the inner surface of the inner wall (2) of the brazed assembly; fastening the second positioning block (21) with the brazed assembly through the third fastening screw (23); moving the second scribing plate (22) to allow the second end of the second scribing plate (22) to be in close contact with the outer surface of the outer wall (1) of the brazed assembly; fastening the second scribing plate (22) with the second positioning block (21) through the fourth fastening screw (24); and depicting an outer contour of a contact region to determine a center of the outer contour, wherein the center of the outer contour is configured as the center of the pressure-measuring boss (21) on the outer surface of the outer wall (1) of the brazed assembly for scribing.

6. The method according to claim 1, **characterized in that** the X-ray inspection is performed using the X-ray probe.

7. The method according to claim 1, **characterized in that** $R_1 \leq 1/5R_{boss}$, wherein $R_{boss}$ refers to a theoretical radius of the pressure-measuring boss (21).

8. The method according to claim 1, **characterized in that** in step S7, the radius $R_3$ is calculated by

$$R_3 = \frac{R_1 \times R_2}{R_{boss}} + \sqrt{X_1{}^2 + Y_1{}^2} \leq 1/2R_{nozzle}$$

, wherein $R_{nozzle}$ is the radius of the measuring nozzle hole.

9. The method according to claim 1, **characterized in that** in step (S9),

$$\Delta X = X_2 - X_1, \Delta Y = Y_2 - Y_1;$$

and

$$\Delta X_{allowed} = (R_{boss} - R_{nozzle}) \times R$$

$$\Delta Y_{allowed} = (R_{boss} - R_{nozzle}) \times R;$$

wherein R is an X-ray detection systematic error, and

$$R = \sqrt{(X_2 - X_1)^2 + (Y_2 - Y_1)^2} \times \frac{R_4}{R_2} \qquad R_{nozzle} = \frac{R_4 \times R_2}{R_{boss}} + \sqrt{X_2{}^2 + Y_2{}^2} \leq 2/3R_{boss}$$

; and                          .

10. The method according to claim 1, **characterized in that** in step (S10),

$$\Delta X_i = X_i - X_{i-1}, \Delta Y = Y_i - Y_{i-1};$$

and

$$R_i = \frac{R_{i-1} \times R_2}{Rboss} + \sqrt{(X_i - X_{i-1})^2 + (Y_i - Y_{i-1})^2} \leq R_{nozzle};$$

wherein $(X_i, Y_i)$ are coordinates of the center of the $i^{th}$-expanded hole; and $(X_{i-1}, Y_{i-1})$ are coordinates of a center of an $(i-1)^{th}$-expanded hole.

**Fig. 1**

**Fig. 2**

Fig. 3

<table>
<tr><td colspan="2">**INTERNATIONAL SEARCH REPORT**</td><td>International application No.<br>**PCT/CN2023/113075**</td></tr>
</table>

**A. CLASSIFICATION OF SUBJECT MATTER**

B23P15/00(2006.01)i

According to International Patent Classification (IPC) or to both national classification and IPC

**B. FIELDS SEARCHED**

Minimum documentation searched (classification system followed by classification symbols)

IPC:B23P

Documentation searched other than minimum documentation to the extent that such documents are included in the fields searched

Electronic data base consulted during the international search (name of data base and, where practicable, search terms used)

CNABS, CNTXT, WPABSC, CJFD, ENTXTC: 侧, 侧压, 测量, 层, 发动机, 焊, 划线, 环, 基准, 夹, 夹层, 加工, 径, 扩孔, 两, 螺, 内, 圈, 燃气, 燃气机, 射线, 双, 透视, 外, 找正, 中心, 钻. DWPI, VEN, WOTXT, USTXT, EPTXT, JPTXT: inner, outer, ray, ream, weld, engine, drill, ring, center.

**C. DOCUMENTS CONSIDERED TO BE RELEVANT**

| Category* | Citation of document, with indication, where appropriate, of the relevant passages | Relevant to claim No. |
|---|---|---|
| PX | CN 115847013 A (XI'AN AERO-ENGINE GROUP LTD.) 28 March 2023 (2023-03-28)<br>description, paragraphs 44-62, and figures 1-3 | 1-9 |
| A | CN 102539158 A (NO.11 RESEARCH INSTITUTE OF NO.6 ACADEMY OF CHINA AEROSPACE SCIENCE & TECHNOLOGY GROUP CORP.) 04 July 2012 (2012-07-04)<br>description, paragraphs 4-15, and figures 1-5 | 1-9 |
| A | CN 211388747 U (JIANGXI HONGDU AVIATION INDUSTRY GROUP CO., LTD.) 01 September 2020 (2020-09-01)<br>description, paragraphs 22-40, and figures 1-8 | 1-9 |
| A | US 4373242 A (ALLIS CHALMERS) 15 February 1983 (1983-02-15)<br>description, columns 1-4, and figures 1-6 | 1-9 |
| A | JP 2004314196 A (HITACHI TOOL ENGINEERING, LTD.) 11 November 2004 (2004-11-11)<br>description, paragraphs 7-25, and figures 1-6 | 1-9 |

☑ Further documents are listed in the continuation of Box C.     ☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **20 November 2023** | **23 November 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/113075**

**C.      DOCUMENTS CONSIDERED TO BE RELEVANT**

| Category* | Citation of document, with indication, where appropriate, of the relevant passages | Relevant to claim No. |
|---|---|---|
| A | CN 109362190 A (XIN QIANG ELECTRONICS (QINGYUAN) CO., LTD.) 19 February 2019 (2019-02-19) <br> description, paragraphs 23-38, and figure 1 | 1-9 |
| A | CN 101862942 A (ANSHAN EAST STEEL STRUCTURE CO., LTD.) 20 October 2010 (2010-10-20) <br> description, paragraphs 122-239 | 1-9 |
| A | CN 113211004 A (XI'AN AERO-ENGINE GROUP LTD.) 06 August 2021 (2021-08-06) <br> description, paragraphs 26-53, and figure 1 | 1-9 |

Form PCT/ISA/210 (second sheet) (July 2022)

INTERNATIONAL SEARCH REPORT
Information on patent family members

| International application No. |
| --- |
| **PCT/CN2023/113075** |

| Patent document cited in search report | | | Publication date (day/month/year) | Patent family member(s) | | | Publication date (day/month/year) |
| --- | --- | --- | --- | --- | --- | --- | --- |
| CN | 115847013 | A | 28 March 2023 | None | | | |
| CN | 102539158 | A | 04 July 2012 | CN | 102539158 | B | 30 April 2014 |
| CN | 211388747 | U | 01 September 2020 | None | | | |
| US | 4373242 | A | 15 February 1983 | CA | 1110431 | A | 13 October 1981 |
| JP | 2004314196 | A | 11 November 2004 | JP | 3838569 | B2 | 25 October 2006 |
| CN | 109362190 | A | 19 February 2019 | None | | | |
| CN | 101862942 | A | 20 October 2010 | CN | 101862942 | B | 09 November 2011 |
| CN | 113211004 | A | 06 August 2021 | CN | 113211004 | B | 21 October 2022 |

Form PCT/ISA/210 (patent family annex) (July 2022)